(19) Europäisches Patentamt
European Patent Office
Office européen des brevets

(11) **EP 4 174 600 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **21205426.6**

(22) Anmeldetag: **28.10.2021**

(51) Internationale Patentklassifikation (IPC):
**G06F 11/36** *(2025.01)* **G06F 11/3668** *(2025.01)*
**G06F 9/451** *(2018.01)*

(52) Gemeinsame Patentklassifikation (CPC):
**G06F 11/3668; G06F 11/3692;** G06F 9/451

(54) **VERFAHREN ZUM TESTEN VON STEUERGERÄTEN**

CONTROL DEVICE TESTING METHOD

PROCÉDÉ DE TEST DES DISPOSITIFS DE CONTRÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.05.2023 Patentblatt 2023/18**

(73) Patentinhaber: **VOLKSWAGEN AG**
**38440 Wolfsburg (DE)**

(72) Erfinder: **Glück, Matthias**
**38176 Wendeburg (DE)**

(56) Entgegenhaltungen:
**US-A1- 2020 117 587 US-B1- 10 338 993**

• **SVEN KUHLMANN ET AL: "Simulation of Structural Effects in Embedded Systems and Visualization of Dependencies According to an Intended Attack or Manipulation", 25 September 2012, COMPUTER SAFETY, RELIABILITY, AND SECURITY, SPRINGER BERLIN HEIDELBERG, BERLIN, HEIDELBERG, PAGE(S) 498 - 507, ISBN: 978-3-642-33674-4, XP047017166**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Testen von Steuergeräten sowie ein Recheneinheitsprogramm und ein Recheneinheitsprogrammprodukt. Zudem werden eine Testschaltung und eine entsprechende Testvorrichtung vorgestellt.

Steuergeräte sind in einer Vielzahl von unterschiedlichsten technischen Lösungen ein wichtiger Bestandteil. Dabei reicht ihre Anwendung von einfachen bis hin zu essentiellen Aufgabenbereichen. Insbesondere Steuergeräte in Fahrzeugen, Schiffen oder in Flugzeugen sind für essentielle Aufgabenbereiche vorgesehen, sodass ohne ihre einwandfreie Funktionsweise ein sicherer Betrieb nicht gewährleistbar ist.

Steuergeräte in Fahrzeugen, Schiffen oder allgemein in der Flugindustrie werden nach dem klassischen V-Modell entwickelt. Dabei werden auf der linken Seite V Anforderungen formuliert, welche auf der rechten Seite V dann getestet werden beziehungsweise zum Test kommen. Das V-Modell geht allgemein dabei von einzelnen disjunkten, eindeutigen, atomaren und testbaren Anforderungen aus. Dies steht im Einklang mit den Softwareanforderungen gemäß beispielsweise der ISO 29148. Im Test werden die Anforderungen einzeln nacheinander durch verschiedene Testentwurfsverfahren getestet. Diese Verfahren sind etwa in der ISO 26262 für sicherheitskritische Systeme beschrieben. Auch sind Verfahren in der ISO 29119 detailliert beschrieben.

Für zukünftige Prüfverfahren von Steuergeräten ist es wünschenswert, dass mit vergleichbar geringem Aufwand auch zeitlich bedingte Verschränkungen und Abhängigkeiten von zu testenden Funktionen ermittelbar sind. Dies wird in den Standardverfahren, wenn überhaupt, nur in geringem Maße ermöglicht, was somit einen gewissen Nachteil darstellt.

US 10,338,993 B1 betrifft eine Recheneinheit, die eine Testsuite erzeugt, die Testfälle zum Testen eines Systems bereitstellt. Eine Testbedingung in der Testsuite umfasst eine von unterschiedlichen Ebenen, die unterschiedliche Optionen darstellen, die einem kategorialen Faktor für das System zugeordnet sind.

US 2020/0117587 A1 betrifft eine log-file-Analyse, bei der akzeptable Abweichungen zwischen log-file-Einträgen zur Erzeugung unterschiedlicher Muster verwendet werden, wobei ein Abgleich von log-file-Einträgen mit bekannten akzeptablen Erfolgsmustern einen Hinweis auf System- oder Anwendungsanomalien liefern soll.

S. Kuhlmann et al.: ("Simulation of Structural Effects in Embedded Systems and Visualization of Dependencies According to an Intended Mack or Manipulation", 25. September 2012, COMPUTER SAFETY, RELIABILITY, AND SECURITY, SPRINGER BERLIN HEIDELBERG, BERLIN, S. 498 - 507) betrifft die Simulation von Struktureffekten in eingebetteten Systemen und Visualisierung von Abhängigkeiten entsprechend einer beabsichtigten Attacke oder Manipulation.

Der Erfindung liegt nun die Aufgabe zugrunde, ein alternatives Verfahren zum Testen von Steuergeräten bereitzustellen, welches die zuvor angesprochenen Nachteile wenigstens zum Teil überkommt.

Die Erfindung ist in den beigefügten Ansprüchen beschrieben.

In bevorzugter Ausgestaltung der Erfindung ist vorgesehen, dass ein Verfahren zum Testen von Steuergeräten bereitgestellt wird. Solch ein Verfahren umfasst dabei die folgenden Schritte: Zunächst wird ein Steuergerät, welches mehrere Funktionen, darunter wenigstens eine Funktion in Abhängigkeit wenigstens einer Bedingung und/oder wenigstens eine invariante Funktion umfasst, bereitgestellt und betrieben. Dann wird eine Testroutine, welche das betriebene Steuergerät hinsichtlich seiner Funktion testet, bereitgestellt und betrieben. In einem nächsten Schritt werden die zu testenden Funktionen in wenigstens zwei Gruppen aufgeteilt, wobei eine erste Gruppe Funktionen umfasst, welche benutzerdefiniert als sicherheitsrelevante Funktion klassifiziert werden und alle weiteren Gruppen die übrigen Funktionen umfassen. Es werden die jeweiligen Funktionen der wenigstens zwei Gruppen getestet.

In einem nächsten Schritt werden jeweilige Zeitinformationen von jeweiligen Funktionen durch Auswertung von Log-Files ermittelt. Dann wird ermittelt, inwieweit eine getestete Funktion eine Verbindung zu wenigstens einer getesteten Funktion aus wenigstens einer anderen Gruppe allgemein und in Bezug auf jeweilige Zeitinformationen aufweist. Allgemeine Bezüge sind beispielsweise auch ohne einen Zeitbezug bereits vorhanden, sodass auf diese Weise alle Bezüge zwischen jeweiligen Funktionen mit Hilfe des vorgestellten Verfahrens berücksichtigt werden, sodass eine besonders tiefe Analyse der zu erreichenden Ergebnisse möglich ist.

In einem nächsten Schritt werden die getesteten Funktionen mit jeweils verbundenen und getesteten Funktionen aus allen anderen Gruppen unter Berücksichtigung der jeweiligen allgemeinen Verbindung und jeweiliger Zeitinformationen durch Bildung von Kreuzprodukten kombiniert. Es werden dann Zwischenergebnisse von jeweiligen Kombinationen erstellt. Dann werden die Zwischenergebnisse zu einem Kombinationstestergebnis zusammengefasst. In einem abschließenden Schritt wird das Kombinationstestergebnis bereitgestellt.

Auf diese Weise ist es möglich, ein alternatives Verfahren zum Testen von Steuergeräten bereitzustellen, welches die zuvor angesprochenen Nachteile wenigstens zum Teil überkommt. Durch Auswertung der Zeitbezüge zwischen funktionalen und sicherheitsrelevanten Funktionen ist es nunmehr möglich, dass Aussagen über das Einleiten/Verfehlen von Sicherheitsmerkmalen über die Zeit gegeben werden können. Es ist somit etwa möglich, Hinweise in dem Kombinationsergebnis und zumindest teilweise bereits in den Zwischenergebnissen zu erhalten, welche darauf hindeuten, wann in Bezug auf temporale Zusammenhänge welche Bedingungen von Sicherheitsmerkmalen verletzt werden. Diese Erkenntnisse sind dann für eine entsprechende Produktoptimierung zu verwenden. Auch können somit Erkenntnisse erhalten werden, inwiefern zeitliche Bezüge von den zu testenden Funktionen in Sicherheitslücken resultieren, die es dann zu schließen gilt.

Insbesondere dann, wenn das zu testende Steuergerät in einem Produkt vorgesehen wird, welches in Teilbereichen sicherheitsrelevante Merkmale aufweist, ist es wichtig zu erkennen, ob alle Sicherheitsfunktionen auch im Hinblick auf jeweilige Interdependenzen, insbesondere hinsichtlich in Bezug auf zeitlich bedingte Interdependenzen, greifen oder nicht. Dadurch, dass sicherheitsrelevante Funktionen und damit verbundene weitere Funktionen gleichermaßen für sich getestet werden und anschließend über eine Verknüpfung dieser dann eine übergeordnete Aussage in Form eines Kombinationsergebnisses bereitgestellt wird, ist es möglich, ein erweitertes Sicherheitsqualitätsmaß zu erreichen. Ist etwa eine für sich stehende Funktion, welche für sich genommen als nicht sicherheitsrelevant einzustufen ist, wiederum für eine sicherheitsrelevante Funktion von einer gewissen Bedeutung, so liefert das Kombinationsergebnis hier erste Hinweise etwa über ein Ausmaß von derlei problematischen Kreuzverbindungen. Das Kombinationsergebnis kann somit in nachgelagerten Schritten etwa für die Verbesserungen des Steuergeräts herangezogen werden und liefert Experten erste konkrete Hinweise über mögliche Schwachstellen, wobei nunmehr auch zeitliche Bezüge berücksichtigt werden können.

In weiterer bevorzugter Ausgestaltung der Erfindung ist vorgesehen, dass ein Recheneinheitsprogramm bereitgestellt wird, welches Programmcodemittel zum Durchführen aller Schritte gemäß einem der Ansprüche 1 bis 4 umfasst, wenn das Programm auf einer Recheneinheit ausgeführt wird. Die zuvor genannten Vorteile gelten, soweit übertragbar, auch für das bereitgestellte Recheneinheitsprogramm. Die Recheneinheit, auf welcher das Recheneinheitsprogramm vorgesehen wird, kann beispielsweise ein jeglicher Computer sein, insbesondere ein Computer, welcher für die Verwendung in einem Fahrzeug ausgelegt ist.

In weiterer bevorzugter Ausgestaltung der Erfindung ist vorgesehen, dass ein Recheneinheitsprogrammprodukt bereitgestellt wird, welches Programmcodemittel umfasst, welche auf einem computerlesbaren Medium gespeichert sind, um das Verfahren gemäß einem der Ansprüche 1 bis 4 durchzuführen, wenn das Programm in einer Recheneinheit läuft. Die zuvor genannten Vorteile gelten, soweit übertragbar, auch für das vorgestellte Recheneinheitsprogrammprodukt.

Die Recheneinheit, für welche das Recheneinheitsprogrammprodukt vorgesehen ist, kann beispielsweise ein jeglicher Computer sein, insbesondere ein Computer, welcher für die Verwendung in einem Fahrzeug ausgelegt ist. Auch kann beispielsweise ein Computer gemeint sein, welcher sich für eine Verwendung in der Flugzeugindustrie, in der Biotechnologie oder für die Schifffahrt eignet.

In weiterer bevorzugter Ausgestaltung der Erfindung ist vorgesehen, dass eine Testschaltung bereitgestellt wird, welche dazu eingerichtet ist, ein Verfahren gemäß einem der Ansprüche 1 bis 4 auszuführen. Die zuvor genannten Vorteile gelten, soweit übertragbar, auch für die vorgestellte Testschaltung.

In weiterer bevorzugter Ausgestaltung der Erfindung ist vorgesehen, dass eine Testvorrichtung bereitgestellt wird, welche eine Testschaltung nach Anspruch 7 umfasst. Die zuvor genannten Vorteile gelten, soweit übertragbar, auch für die vorgestellte Testvorrichtung.

Weitere bevorzugte Ausgestaltungen der Erfindung ergeben sich aus den übrigen, in den Unteransprüchen genannten Merkmalen.

Gemäß der Erfindung ist vorgesehen, dass eine erste Gruppe Funktionen umfasst, welche benutzerdefiniert als sicherheitsrelevante Funktionen klassifiziert werden und alle weiteren Gruppen die übrigen Funktionen umfassen. Somit lassen sich jeweilige Teilaussagen hinsichtlich jeweiliger Funktionen zunächst ermitteln, um anschließend eine gezielte Kombinatorik durchzuführen. Es lassen sich benutzerdefiniert jeweilige Einstellungen bewirken, sodass das vorgestellte Verfahren in einfachen Schritten mit Vorteil an jeweilige Anwendungsszenarien anpassbar ist, sodass ein besonders flexibles Verfahren resultiert.

Gemäß der Erfindung ist vorgesehen, dass das Kombinieren als jeweilige Kreuzproduktbildung vollzogen wird. Eine zielgenaue Kombinatorik erhöht somit die Aussagekraft des Endergebnisses, sodass eine gezielte Interpretation möglich ist.

Ferner ist in einer weiteren bevorzugten Ausgestaltung der Erfindung vorgesehen, dass die vorherigen Schritte im Zusammenhang mit wenigstens einer Software des zu testenden Steuergeräts vollzogen werden. Das Verfahren ist entsprechend flexibel einsetzbar und lässt sich für dieses Szenario auslegen.

Auch ist in einer weiteren bevorzugten Ausgestaltung der Erfindung vorgesehen, dass die vorherigen Schritte im Zusammenhang mit wenigstens einer Hardwarekomponente des zu testendenden Steuergeräts vollzogen werden. Das Verfahren ist entsprechend flexibel einsetzbar und lässt sich für dieses Szenario auslegen.

Schlussendlich ist in einer weiteren bevorzugten Ausgestaltung der Erfindung vorgesehen, dass eine Anzahl von jeweiligen kombinierten Funktionen, welche zu einer benutzerdefiniert festgelegten Funktion zugeordnet werden, hinsichtlich ihrer Zeitangaben in einer grafischen Darstellung, insbesondere in einem Histogramm, dargestellt werden, wobei diese Information in den jeweiligen Zwischenergebnissen zusätzlich angegeben werden. Sicherheitslücken sind somit noch eindeutiger mittels der erhaltenen Ergebnisse erkennbar, sodass das vorgestellte Verfahren einen großen Vorteil hinsichtlich effizienter Prüfungsverfahren von Steuergeräten liefert.

Das vorgestellte Verfahren und die vorgestellten Gegenstände sind beispielsweise mit Vorteil innerhalb der Fahrzeugindustrie einsetzbar und verwendbar. Insbesondere die Gegenstände sind im Zusammenhang mit jeglichen Fahrzeugen verwendbar. Beispielsweise um jeweilige Steuergeräte in Fahrzeugen, insbesondere Personenkraftfahrzeugen, zu testen. Beispielsweise kann es sich dabei um teil- oder vollautonome Fahrzeuge handeln. Auch im Zusammenhang mit Flugsicherheits- und anderen Sicherheitsnormen sind Einsätze der offenbarten Gegenstände und des Verfahrens vorstellbar. Darüber hinaus ist überall dort ein Einsatz denkbar, in denen kombinierte Produkttests (Elektronik/Software) relevant sind.

Neben der Fahrzeugindustrie ist somit auch ein Einsatz im Flugzeugbau, allgemein in der Avionik oder im Schiffsbau denkbar. Auch in der Medizinindustrie ist ein Einsatz denkbar. Letztlich ist ein Einsatz im Zusammenhang mit jeglichen SW/HW (Elektronik)-testbaren Produkten denkbar, die entsprechend mit den Debug-Schnittstellen und/oder Busschnittstellen und/oder Signalschnittstellen ausgestattet sind.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend anhand eines Ausführungsbeispiels und dazugehöriger Zeichnungen näher erläutert. Die Figuren zeigen:

Figur 1    eine schematische Darstellung von einem Ablaufdiagramm von einem Verfahren zum Testen von Steuergeräten;

Figur 2    eine schematische Darstellung von einem Recheneinheitsprogramm;

Figur 3    eine schematische Darstellung von einem Recheneinheitsprogrammprodukt;

Figur 4    eine schematische Darstellung von einer Testschaltung;

Figur 5    eine schematische Darstellung von einer Testvorrichtung.

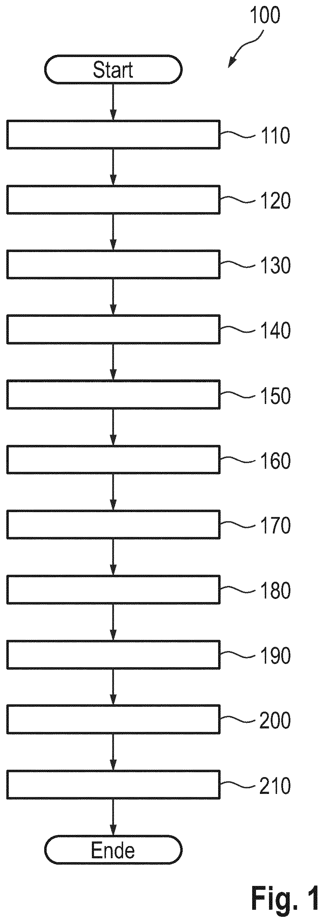

Figur 1 zeigt eine schematische Darstellung von einem Ablaufdiagramm 100 von einem Verfahren zum Testen von Steuergeräten. In einem ersten Verfahrensschritt 110 wird ein Steuergerät bereitgestellt und betrieben, welches wenigstens eine Funktion in Abhängigkeit wenigstens einer Bedingung und wenigstens eine invariante Funktion umfasst. In einem zweiten Verfahrensschritt 120 wird eine Testroutine bereitgestellt und betrieben, welche das betriebene Steuergerät hinsichtlich seiner Funktion testet. In einem dritten Verfahrensschritt 130 werden die zu testenden Funktionen in wenigstens zwei Gruppen aufgeteilt. In einem vierten Verfahrensschritt 140 werden die jeweiligen Funktionen der wenigstens zwei Gruppen getestet. Beispielsweise ist es vorstellbar, dass diese jeweiligen Testresultate in Form von Logfiles erstellt werden. In einem fünften Verfahrensschritt 150 wird ermittelt, inwieweit eine getestete Funktion eine Verbindung zu wenigstens einer getesteten Funktion aus wenigstens einer anderen Gruppe aufweist. Die im vorherigen Schritt erstellten Logfiles sind beispielsweise hierfür auslesbar vorliegend, sodass diese Informationen entsprechend herausgezogen werden können. In einem sechsten Verfahrensschritt 160 werden jeweilige Zeitinformationen von jeweiligen zu testenden Funktionen ermittelt. In einem siebten Verfahrensschritt 170 wird ermittelt, inwieweit eine getestete Funktion eine Verbindung zu wenigstens einer getesteten Funktion aus wenigstens einer anderen Gruppe allgemein und in Bezug auf jeweilige Zeitinformationen aufweist. Allgemeine Verbindungen sind jegliche Zusammenhänge, welche aufgrund einer gegenseitigen Abhängigkeit von zwei oder mehrere Funktionen untereinander gegeben sind. In einem achten Verfahrensschritt 180 werden die getesteten Funktionen mit jeweils verbundenen und getesteten Funktionen aus allen anderen Gruppen unter Berücksichtigung eines allgemeinen Bezugs und jeweiliger Zeitinformationen kombiniert. In einem neunten Verfahrensschritt 190 werden jeweilige Zwischenergebnisse von jeweiligen Kombinationen erstellt. In einem zehnten Verfahrensschritt 200 werden die Zwischenergebnisse zu einem Kombinationstestergebnis zusammengefasst. In einem elften Verfahrensschritt 210 wird das Kombinationstestergebnis bereitgestellt.

Das Testen der jeweiligen Funktionen kann etwa über geeignete Testcoveragemetriken in Anlehnung an ISO29119-4 vollzogen werden. Auf diese Weise ist es möglich, ein gewisses Maß an Qualität zu ermitteln. Dabei ist weiterhin vorstellbar, dass die Zuordnung der Funktion auf jeweilige Gruppen insbesondere so vollzogen wird, sodass eine Unterscheidung der Funktionen basierend auf ihrer Eigenschaft in wenigstens einen Testobserver und in Invarianten durchführbar ist. Dabei ist ein Testobserver ein Überwacher einer Funktion. Er basiert auf einer Anforderung auf der linken Seite des V-Modells. Er ist somit der eigentliche Prüfalgorithmus zum Test der konkreten Anforderung, auf welcher er basiert. Im Gegenteil zu einer Invariante ist ein Testobserver an wenigstens eine Bedingung geknüpft. Wenn zum Beispiel die Eigenspannung größer oder gleich sechs Volt ist und das Produkt sich im eingeschalteten Zustand befindet, wobei dieser Zustand zusätzlich als "aktiver Modus" deklariert ist, dann soll die Unterstützungsleistung immer größer oder gleich einem vorgegebenen Wert sein. Im Gegensatz zu einem Testobserver ist eine Invariante eine Bedingung, welche zu jedem beliebigen Zeitpunkt gültig ist. Zum Beispiel kann vorgesehen sein, dass ein Produkt innerhalb einer vorgegebenen Zeitspanne, beispielsweise fünf Millisekunden, auf dem Bus eine Antwort geben muss. Somit ist eine Invariante ein spezieller Observer, wobei diese Invariante jedoch ohne Bedingungen vorgesehen ist.

Basierend auf der allgemeinen Aussage, eine gewisse Funktion, welche in einem Steuergerät hinterlegt ist und sich zu einer bestimmten Gruppe zuordnen lässt, abzutesten, ist es im Detail vorstellbar, dass dieses Abtesten wie folgt vollzogen wird: Wenn die Testobserver respektive die Invarianten als Coveragepunkte definiert werden, so ergeben sich jeweilige Coveragemengen, die hauptsächlich bei anforderungsbasierten Testroutinen linear durchlaufen werden. Die jeweiligen Coveragepunkte, einsortiert in eine Menge, basieren dabei auf jeweils getesteten Anforderungen und somit auch auf den durch die Anforderungen hinterlegten jeweiligen Merkmalen und deren jeweiligen Definitionen, welche jeweils mit den zu testenden Funktionen assoziiert sind. Beispielsweise resultiert eine Menge an Coveragepunkten wie folgt:

$$G = \{\, C_i \,\} \text{ mit } i = 0 \ldots n - 1$$

Die einzelnen $C_i$ werden bei dem anforderungsbasierten Testen alle bei vollständiger Umsetzung der Anforderungen im Test abgelaufen. So ist es möglich, eine Basis für eine inhaltliche Anforderungsabdeckung zu generieren, welche für das Testen einer jeweiligen für sich stehenden Funktion repräsentativ ist. Vor dem Durchführen des eigentlichen Tests können beispielsweise jeweilige $C_i$ auf null gesetzt werden. Jedes $C_i$ wird inkrementiert sobald es im Test angelaufen wird. Dabei kann über eine Struktur im $C_i$ vermerkt werden, ob es sich um einen erfolgreichen oder fehlgeschlagenen Test für das jeweilige $C_i$ handelt. Am Ende von den anforderungsbasierten Testläufen darf kein $C_i$ ungefüllt sein. Es ist somit möglich eine Statistik über die Auswertung von G anzulegen oder sich ausgeben zu lassen, wobei vermerkt wird, welches $C_i$ wie oft erfolgreich beziehungsweise fehlgeschlagen ist.

Ausgehend von diesen jeweils durchgeführten Testläufen mit jeweiligen resultierenden Informationen ist anschließend eine Erweiterung um die Mächtigkeit der Kombinatorik von $C_i$ vorgesehen. Diese Kombinatorik ist im Speziellen deswegen wichtig, um etwa bei sicherheitsrelevanten Produkten eine entsprechende Merkmals-Kreuzproduktcoverage aufzubauen. Insbesondere in sicherheitsrelevanten Produkten ist es wichtig zu erkennen, ob alle Sicherheitfunktionen unter verschiedenen funktionalen Aspekten greifen. Dies ist entsprechend mit jeweiligen Coveragepunktmengen aus den verschiedenen Gruppen möglich.

$$S = \{\, CS_i \,\} \text{ mit } i = 0 \ldots k - 1,$$

wobei k die Anzahl der Sicherheitsfunktion ist.

Die restlichen Funktionen sind entsprechend in eine andere Menge respektive in eine andere Gruppe zu packen:

$$F = \{\, C_i \,\} \text{ mit } i = 0 \ldots n - k - 1.$$

Durch die Kreuzproduktbildung der Mengen S und F ist anschließend eine Abdeckung der Sicherheitsfunktionen unter Berücksichtigung der funktionalen Merkmale möglich, wobei jeweilige Zeitbezüge hierbei berücksichtigt werden.

$$K = S(t) \times F(t).$$

Durch Auswertung der Zeitbezüge zwischen funktionalen und sicherheitsrelevanten Funktionen ist es möglich, dass Aussagen über das Einleiten/Verfehlen von Sicherheitsmerkmalen über die Zeit gegeben werden können.

Ein Beispiel stellt bei einem Einsatz im Zusammenhang mit einem Fahrzeug etwa die Lenkung dar. Die Lenkung muss bei Temperaturen größer 140 °C abgeschaltet werden. Dies stellt eine Sicherheitsfunktion dar. Da in der Anforderung keine Angaben existieren, in welchen Betriebszuständen dies gilt, wird sie als allgemeingültig (invariant) angesehen. Hieraus kann also abgeleitet werden, dass diese Sicherheitsfunktion unter allen anderen Betriebsmodi gelten muss und damit über das Kreuzprodukt mit allen definierten funktionalen Betriebszuständen kombinierbar ist. In einem weiteren Beispiel sind zwei funktionale Betriebszustände vorstellbar: Aktiv und Einparken. Aktiv ist der normale Lenkmodus beim Fahren und Parken ist ein Assistent zum Einparken. Wie in dem vorgestellten Verfahren beschrieben, werden die Testprogramme alle abgefahren, um das Produkt abzusichern. Nach dem Abschluss der Testprogramme werden entsprechend durch eine Datenanalyse von log-Files und Messdaten die jeweiligen Kreuzprodukte gebildet. Durch die Auswertung der Dateninformation sind auch die Zeitstempelinformation vorhanden, sodass diese für die Ermittlung der Zeitinformationen verwendet werden können. Das bedeutet, dass somit bekannt ist, wann ein funktionaler Zustand eingetreten ist und wann eine Sicherheitsfunktion geschaltet wurde. Ein Beispiel für eine log / Messdatendatei könnte wie folgt aussehen:

| [08:25:23-512] | Aktivmodus erreicht |
| ... | |
| [08:25:23-605] | Sicherheitsfunktion Abschalten eingetreten |
| ... | |
| [08:25:23-617] | Sicherheitsfunktion Abschalten Produkt abgeschaltet |

Durch die Zeitdifferenzen ergibt sich die Aussage über den zeitlichen Bezug zueinander:

$$K = S(t) \times F(t)$$

Für das Beispiel also:

$$= \text{Abschalten } (t) \times \{\text{Aktiv } (t) \text{ Einparken } (t)\}$$
$$= \{\{105,12\} \{0\}\}$$

Das heißt, es wurde das Abschalten in Bezug auf den Aktivmodus gefunden und der Abschaltvorgang ist nach 12 ms abgeschlossen, wobei dieses Ereignis 105 ms nach Eintritt in den Aktivmodus stattfand. Die Null im zweiten Element bedeutet, dass noch keine Kombination zwischen Abschalten, Sicherheitsfunktion und Einparken vorhanden war. In diesem Zusammenhang ist beispielsweise dann auch das Auswerten von vielen Messdaten und log-Files vorstellbar, sodass sich große Matrizen ergeben. Im vorliegenden Beispiel würde dies dann beispielsweise so aussehen:

$$K = \{\{\{105, 12\}\{613, 22\} \{232, 19\} \ldots \{1324, 15\} \{0\}\}$$

Die geschweiften Klammern deuten hier die vorhandene Komplexität an. Mit dem ersten Konstrukt lässt sich nunmehr dann eine Auswertung machen:

$$K = \{\{\{105, 12\}\{613, 22\} \{232, 19\} \ldots \{1324, 15\}\}$$

Von Interesse ist dabei etwa die im sicherheitsrelevanten Umfeld zweite Zahl pro Tupel. Sie zeigt an, wie lange es dauert, bis das Abschalten erreicht wird (Erreichen des Sicherheitsziels).

Es ist etwa vorstellbar, dass eine spezifische Anforderung zum Abschalten vorhanden ist. Beispielsweise muss das Produkt beim Erkennen einer Abschaltanforderung innerhalb von 20 ms abgeschaltet sein.

Diese Informationen lassen sich dann in ein Histogramm übertragen, wobei je Abschaltzeit (etwa nach < 5 ms, < 10 ms, < 15 ms, < 20 ms, > 20 ms) dann eine jeweilige Anzahl von zugeordneten Funktionen aufgetragen werden. So kann beispielsweise erkannt werden, inwiefern Funktionen nach einer bestimmten Abschaltzeit (zum Beispiel 20 ms) noch nicht abgeschaltet sind. Hieraus sind also entsprechende Verletzungen von vorgegebenen Sicherheitszeilen ablesbar, wobei diese Informationen zusätzlich in die Zwischenergebnisse einfließen können. Zum einen kann mittels des vorgestellten Verfahrens somit über die nebenläufige oder nachgelagerte Auswertung eine höhere Testtiefe erreicht werden und damit eine höhere Qualität in der Produktabsicherung erreicht werden. Die mittels temporaler Bezüge erreichte Metrik erlaubt es zudem, Hinweise anzugeben, unter welchen Bedingungen diese Sicherheitsmerkmale verletzt wurden. Beispielsweise kann angegeben werden, wie viele und welche Funktion über die vorbestimmte Abschaltzeit hinaus erst abschalten. In diesem Zusammenhang ist es vorstellbar, dass eine vorbestimmte Zeitgrenze bestimmt wird, sodass eine gezielte Dokumentation und Angaben von diesen Funktionen, welche die Zeitgrenze verletzen, bereitstellbar sind. Auch können somit gewisse Zeitpuffer von Funktionen angegeben werden, sodass schnell zu erkennen ist, in welchen Bereichen welche zeitlichen Margen hinsichtlich einer vorgegebenen Abschaltzeit vorhanden sind. Aus diesen Informationen sind somit Aussagen ableitbar, inwiefern ein getestetes System beziehungsweise Steuergerät als sicher gilt oder nicht.

Ein weiteres Merkmal aus den mittels des vorgestellten Verfahrens erreichten Ergebnissen beziehungsweise Auswertungen wäre somit beispielsweise auch die Anzahl der Funktionen, welche bestimmte Eigenschaften aufweisen. Vorstellbar ist, dass etwa nur sehr wenige Funktionen vorhanden sind, welche bestimmte Eigenschaften aufweisen. Dies kann auf eine selten erreichbare Kombination hindeuten oder die durchgeführte Testroutine deckt diesen spezifischen Fall nicht ab, wobei dieser Umstand dann auf eine eventuell vorhandene Testlücke schließen lässt. Das vorgestellte Verfahren ist somit vorteilhaft dazu einsetzbar, solche Testlücken aufzudecken, damit diese dann geschlossen werden können.

Auch hier ist es möglich, über die Zwischenergebnisse hinaus ein aggregiertes Kombinationsergebnis zu bestimmen, welches entsprechend für eine weitere Analyse dann bereitstellbar ist. Mit anderen Worten werden entsprechend nach einem jeweiligen Vorgang von jedem Ki die Anzahl der erfolgreichen und nicht erfolgreichen Tests wiedergegeben. Ein jeweils vollständiges Ablaufen aller Ki kann beispielsweise dann in Kombination mit einem entsprechendem Robustheitstestverfahren erfolgen.

Es ist zudem vorstellbar, dass die Coveragepunkte sich auch zu komplexeren Szenarien aufbauen lassen. Zum Beispiel will man den Ablauf im Test von C1 → C4 → C5 sehen. Über eine Coverage-Merkmalspfadanalyse lassen sich Aussagen über die Stabilität des Produkts unter bestimmten funktionalen Bedingungen beschreiben.

Aufgrund der Einbindung der jeweiligen Zeitbezüge lassen sich mit dem vorgestellten Verfahren nun auch sehr komplexe temporale Pfade und Auswertungen schaffen.

Die oben aufgeführten Pfade erhalten nun auch einen zeitlichen Bezug: C1 (t) → C4 (t) → C5 (t). Damit lassen sich sehr komplexe Zeitverhalte in Bezug auf Sicherheitsmerkmale prüfen. Ein Beispiel hierfür könnte wie folgt aussehen:

C1 = Hochfahren des Produkts
C4 = Aktiv
C5 = Abschalten

Nachgelagerte Statistiken, Histogramme oder ähnliche Verfahren können zur Auswertung der Pfade genutzt werden. Sie geben dem Testanalysten zusätzliche Hinweise auf funktionale Pfadabdeckungen in Bezug auf eine gegebenenfalls vorhandene Sicherheitsrelevanz.

Das vorgestellte Verfahren lässt sich auch auf mechanische Tests abbilden, wenn man zum Beispiel den Suchrauch von mechanischen Bewegungen beschreiben will.

Allgemein gelten gleichfalls für das vorgestellte Verfahren die folgenden Aussagen: Die Messung der Coveragepunkte kann in einem softwarebasierten Test durch das Abgreifen der Software-Variablen, der Strukturen und Informationen einfach geschehen. Bei einem vorliegenden elektronikhardwarebasierten Test kann die Information aus den Datenströmen von entsprechenden Debug-Schnittstellen von MCU ermittelt werden. Dies kann beispielsweise in Kombination mit einem Echtzeitanalyseverfahren, welches für die Funktionsprüfungen von Hardware und Software von Steuergeräten ausgelegt ist, vollzogen werden.

Dadurch, dass eine Datenerhebung unabhängig vom Prüfort und einer Prüfumgebung ist, ist sie universell. Durch klare Messkriterien für eine Steuergerätesoftwarequalität können Produkte solider auf den Markt gebracht werden. Maßnahmen können kontrolliert werden und eine jeweilige Verbesserung der Steuergerätesoftware ist mittels des vorgestellten Verfahrens deswegen vorteilhaft messbar.

Insbesondere für den Fahrzeugbau ist das vorgestellte Verfahren von hohem Nutzen. Durch den stetig wachsenden Anteil von Softwarefunktionen im Fahrzeug steigt auch deren Wahrnehmung bei den Kunden. Die Kunden verstehen zunehmend, dass entsprechende Software von Steuergeräten die Qualität ihres Fahrzeugs bestimmen. Mit dem vorgestellten Verfahren ist es möglich, mit einem überschaubaren Aufwand auch komplexere Zusammenhänge abzuprüfen und insbesondere vernetzte Strukturen unter den genannten Bedingungen bereits während der Entwicklungsphase zu testen und je nach Ergebnis dann zu verbessern. Das vorgestellte Verfahren eignet sich, um eine Qualitätsmetrik aufzubauen beziehungsweise die jeweiligen erhaltenen Ergebnisse hierfür zu verwenden. Insbesondere ist auch eine Kombination aus hardware- und softwarebasierten Tests möglich, um folglich eine Gesamtqualitätsmetrik aufzubauen.

Es ist zudem vorstellbar, dass das vorgestellte Verfahren als Ergänzung zu einem Robustheitstestverfahren durchgeführt wird. Auch ist vorstellbar, dass das vorgestellte Verfahren als Ergänzung zu einem Verfahren zur parallelen Echtzeitanalyse bei Funktionsprüfungen von Hardware und Software von Steuergeräten durchgeführt wird.

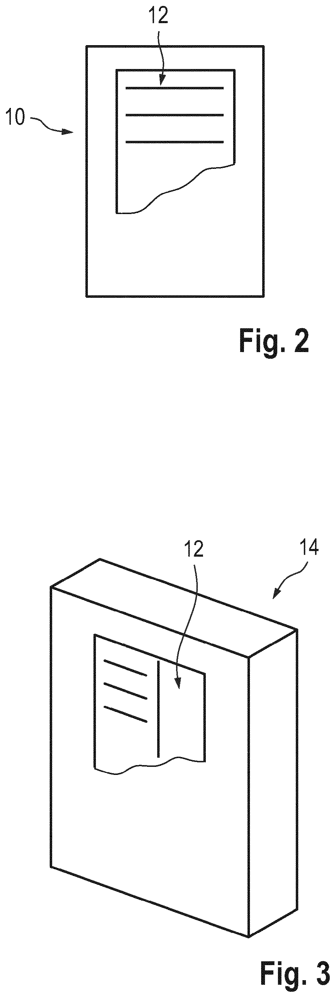

Figur 2 zeigt eine schematische Darstellung von einem Recheneinheitsprogramm 10. Solch ein Recheneinheitsprogramm 10 umfasst dabei Programmcodemittel 12 zum Durchführen aller Schritte gemäß einem der Ansprüche 1 bis 4, wenn das Programm auf einer nicht näher dargestellten Recheneinheit ausgeführt wird.

Figur 3 zeigt eine schematische Darstellung von einem Recheneinheitsprogrammprodukt 14. Solch ein Recheneinheitsprogrammprodukt 14 umfasst dabei Programmcodemittel 12, welche auf einem computerlesbaren Medium gespeichert sind, um das Verfahren gemäß einem der Ansprüche 1 bis 4 durchzuführen, wenn das Programm in einer Recheneinheit läuft.

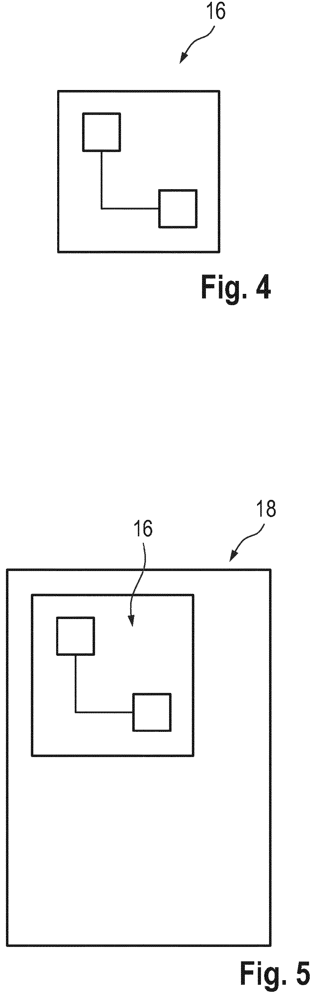

Figur 4 zeigt eine schematische Darstellung von einer Testschaltung 16. Solch eine Testschaltung 16 ist dazu eingerichtet, ein Verfahren gemäß einem der Ansprüche 1 bis 4 auszuführen.

Figur 5 zeigt eine schematische Darstellung von einer Testvorrichtung 18. Diese Testvorrichtung 18 umfasst dabei eine Testschaltung 16 nach Anspruch 7.

**Bezugszeichen**

10      Recheneinheitsprogramm
12      Programmcodemittel
14      Recheneinheitsprogrammprodukt
16      Testschaltung
18      Testvorrichtung

100     Ablaufdiagramm
110     erster Verfahrensschritt
120     zweiter Verfahrensschritt
130     dritter Verfahrensschritt
140     vierter Verfahrensschritt
150     fünfter Verfahrensschritt
160     sechster Verfahrensschritt
170     siebter Verfahrensschritt
180     achter Verfahrensschritt
190     neunter Verfahrensschritt
200     zehnter Verfahrensschritt
210     elfter Verfahrensschritt

**Patentansprüche**

1.  Computerimplementiertes Verfahren zum Testen von Steuergeräten umfassend die folgenden Schritte:

    • Bereitstellen und Betreiben (110) eines Steuergerätes, welches mehrere Funktionen umfasst, darunter wenigstens eine Funktion in Abhängigkeit wenigstens einer Bedingung und wenigstens eine invariante Funktion;
    • Bereitstellen und Betreiben (120) einer Testroutine, welche das betriebene Steuergerät hinsichtlich seiner Funktion testet;
    • Aufteilen (130) der zu testenden Funktionen in wenigstens zwei Gruppen, wobei eine erste Gruppe Funktionen umfasst, welche benutzerdefiniert als sicherheitsrelevante Funktion klassifiziert werden und alle weiteren Gruppen die übrigen Funktionen umfassen;
    • Testen (140) jeweiliger Funktionen der wenigstens zwei Gruppen;
    • Ermitteln (160) jeweiliger Zeitinformationen von jeweiligen Funktionen durch Auswertung von Log-Files;
    • Ermitteln (170), inwieweit eine getestete Funktion aus der Gruppe, die sicherheitsrelevante Funktionen umfasst, eine Verbindung zu wenigstens einer getesteten Funktion aus wenigstens einer anderen Gruppe allgemein aufgrund einer gegenseitigen Abhängigkeit und in Bezug auf jeweilige Zeitinformationen aufweist;
    • Kombinieren (180) von getesteten Funktionen mit jeweils verbundenen und getesteten Funktionen aus allen anderen Gruppen unter Berücksichtigung der jeweiligen allgemeinen Verbindung und jeweiliger Zeitinformationen durch Bildung von Kreuzprodukten;
    • Erstellen (190) von jeweiligen Zwischenergebnissen von jeweiligen Kombinationen;
    • Zusammenfassen (200) der Zwischenergebnisse zu einem Kombinationstestergebnis;
    • Bereitstellen (210) des Kombinationstestergebnisses.

2.  Verfahren nach einem der vorherigen Ansprüche, wobei die vorherigen Schritte im Zusammenhang mit wenigstens einer Software des zu testendenden Steuergeräts vollzogen werden.

3.  Verfahren nach einem der vorherigen Ansprüche 1 bis 2, wobei die vorherigen Schritte im Zusammenhang mit wenigstens einer Hardwarekomponente des zu testenden Steuergeräts vollzogen werden.

4.  Verfahren nach einem der vorherigen Ansprüche, wobei eine Anzahl von jeweiligen kombinierten Funktionen, welche zu einer benutzerdefiniert festgelegten Funktion zugeordnet werden, hinsichtlich ihrer Zeitangaben in einer grafischen Darstellung, insbesondere in einem Histogramm, dargestellt werden, wobei diese Information in den jeweiligen Zwischenergebnissen zusätzlich angegeben werden.

5.  Recheneinheitsprogramm (10) umfassend Programmcodemittel (12) zum Durchführen aller Schritte gemäß einem der Ansprüche 1 bis 4, wenn das Programm auf einer Recheneinheit ausgeführt wird.

6.  Recheneinheitsprogrammprodukt (14) umfassend Programmcodemittel (12), welche auf einem computerlesbaren Medium gespeichert sind, um das Verfahren gemäß einem der Ansprüche 1 bis 4 durchzuführen, wenn das Programm in einer Recheneinheit läuft.

7. Testschaltung (16), welche dazu eingerichtet ist, ein Verfahren gemäß einem der Ansprüche 1 bis 4 auszuführen.

8. Testvorrichtung (18), welche eine Testschaltung (16) nach Anspruch 7 umfasst.

**Claims**

1. A computer-implemented method for testing control devices, comprising the steps of:

    • providing and operating (110) a control device comprising multiple functions, including at least one function dependent on at least one condition and at least one invariant function;
    • providing and operating (120) a test routine which tests the operated control device with regard to its function;
    • dividing (130) the functions to be tested into at least two groups, wherein a first group comprises functions which by user definition are classified as safety-relevant functions, and all further groups comprise the remaining functions;
    • testing (140) each of the functions of the at least two groups;
    • determining (160) the time information of each of the respective functions by evaluating log files;
    • determining (170) to what extent a tested function from the group comprising safety-relevant functions has a connection to at least one tested function from at least one other group generally due to a mutual dependency and with respect to the corresponding time information;
    • combining (180) tested functions with corresponding connected and tested functions from all other groups, taking into account the corresponding general connection and corresponding time information, by forming cross products;
    • creating (190) corresponding intermediate results from each of the combinations;
    • grouping (200) the intermediate results to form a combined test result;
    • providing (210) the combined test result.

2. The method according to any of the preceding claims, wherein the previous steps are carried out in connection with at least one software of the control device to be tested.

3. The method according to any of the preceding claims 1 to 2, wherein the previous steps are carried out in connection with at least one hardware component of the control device to be tested.

4. The method according to any of the preceding claims, wherein a number of respective combined functions which are assigned to a user-defined function are represented with regard to their time information in a graphical representation, in particular in a histogram, wherein this information is additionally indicated in the respective intermediate results.

5. A computing unit program (10) comprising program code means (12) for performing all the steps according to any of claims 1 to 4 when the program is executed on a computing unit.

6. A computing unit program product (14) comprising program code means (12) which are stored on a computer-readable medium for performing the method according to any of claims 1 to 4 when the program runs in a computing unit.

7. A test circuit (16) which is designed to execute a method according to any of claims 1 to 4.

8. A test apparatus (18) comprising a test circuit (16) according to claim 7.

**Revendications**

1. Procédé mis en œuvre par ordinateur permettant de tester des appareils de commande, comprenant les étapes suivantes :

    • fourniture et exploitation (110) d'un appareil de commande, lequel comprend plusieurs fonctions, dont au moins une fonction en dépendance d'au moins une condition et au moins une fonction invariante ;

• fourniture et exploitation (120) d'une routine de test, laquelle teste l'appareil de commande exploité quant à sa fonction ;

• répartition (130) des fonctions à tester dans au moins deux groupes, dans lequel un premier groupe comprend des fonctions qui sont classées de manière définie par l'utilisateur comme fonctions pertinentes pour la sécurité et tous les groupes supplémentaires comprennent les fonctions restantes ;

• test (140) des fonctions respectives des au moins deux groupes ;

• détermination (160) d'informations temporelles respectives provenant de fonctions respectives en évaluant des fichiers journaux ;

• détermination (170) de la mesure dans laquelle une fonction testée du groupe comprenant des fonctions pertinentes pour la sécurité a un lien avec au moins une fonction testée d'au moins un autre groupe généralement en raison d'une interdépendance et par rapport à des informations temporelles respectives ;

• combinaison (180) de fonctions testées avec des fonctions respectivement liées et testées de tous les autres groupes, en tenant compte du lien général respectif et des informations temporelles respectives, en formant des produits croisés ;

• création (190) de résultats intermédiaires respectifs de combinaisons respectives ;

• regroupement (200) des résultats intermédiaires pour former un résultat de test de combinaison ;

• fourniture (210) du résultat du test de combinaison.

2. Procédé selon l'une des revendications précédentes, dans lequel les étapes précédentes sont réalisées en relation avec au moins un logiciel de l'appareil de commande à tester.

3. Procédé selon l'une des revendications précédentes 1 à 2, dans lequel les étapes précédentes sont réalisées en relation avec au moins un composant matériel de l'appareil de commande à tester.

4. Procédé selon l'une des revendications précédentes, dans lequel un certain nombre de fonctions combinées respectives, qui sont associées à une fonction établie définie par l'utilisateur, sont représentées en ce qui concerne leurs indications temporelles dans une représentation graphique, en particulier dans un histogramme, dans lequel ces informations sont indiquées en outre dans les résultats intermédiaires respectifs.

5. Programme de calculateur (10), comprenant des moyens de code de programme (12) permettant de mettre en œuvre toutes les étapes selon l'une des revendications 1 à 4 lorsque le programme est exécuté sur un calculateur.

6. Produit de programme de calculateur (14) comprenant des moyens de code de programme (12) qui sont stockés sur un support lisible par ordinateur pour mettre en œuvre le procédé selon l'une des revendications 1 à 4 lorsque le programme est exécuté sur un calculateur.

7. Circuit de test (16), lequel est conçu pour exécuter un procédé selon l'une des revendications 1 à 4.

8. Dispositif de test (18), lequel comprend un circuit de test (16) selon la revendication 7.

Fig. 1

**Fig. 2**

**Fig. 3**

16

**Fig. 4**

18

16

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10338993 B1

- US 20200117587 A1

**In der Beschreibung aufgeführte Nicht-Patentliteratur**

- Simulation of Structural Effects in Embedded Systems and Visualization of Dependencies According to an Intended Mack or Manipulation. **S. KUHLMANN et al.** COMPUTER SAFETY, RELIABILITY, AND SECURITY. SPRINGER BERLIN HEIDELBERG, 25 September 2012, S498-507